Europäisches Patentamt

European Patent Office

Office européen des brevets

(19)

(11) Publication number: **0 228 553 B1**

# EUROPEAN PATENT SPECIFICATION

(12)

(45) Date of publication of patent specification: **25.03.92**  (51) Int. Cl.5: **G06F  15/68**

(21) Application number: **86115998.6**

(22) Date of filing: **18.11.86**

(54) Apparatus and method for processing multi-value pixel images.

(30) Priority: **27.12.85 JP 293403/85**

(43) Date of publication of application:
**15.07.87 Bulletin  87/29**

(45) Publication of the grant of the patent:
**25.03.92 Bulletin  92/13**

(84) Designated Contracting States:
**DE FR GB IT**

(56) References cited:
**US-A- 4 414 685**

**COMPUTER VISION, GRAPHICS AND IMAGE
PROCESSING, vol. 23, no. 1, July 1983, pages
67-91, Academic Press, Inc., New York, US;
R.T. CHIN et al.: "Ouantitative evaluation of
some edge-preserving noise-smoothing
techniques"**

**APPLIED OPTICS, vol. 23, no. 4, February
1984, pages 560-564, Optical Society of
America, New York, US; R. GORDON et al.:
"Feature enhancement of film mammograms
using fixed and adaptive neighborhoods"**

(73) Proprietor: **International Business Machines
Corporation
Old Orchard Road
Armonk, N.Y. 10504(US)**

(72) Inventor: **Shibano, Kohji
1-28-7, Tamami Asao-ku
Kawasaki-shi Kanagawa-Ken(JP)**

(74) Representative: **Burt, Roger James, Dr.
IBM United Kingdom Limited Intellectual
Property Department Hursley Park
Winchester Hampshire SO21 2JN(GB)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

## Description

The present invention relates to an apparatus and method for processing multi-valued pixel images.

In image processing based on conventional mathematical morphology, for example, that disclosed in "Image Analysis and Mathematical Morphology," Academic Press, London, 1982, erosion and dilation filtering is defined for a binary image of (0, 1), wherein one of 0 and 1 is regarded as null, and for a grey scale image that is considered to have continuous values. Such filtering is applied to image processing with specific consideration being given to spacial structures. A logic device for performing the image processing is disclosed in a patent application by Jan Serra (Japanese Published Examined Patent Application 52-23537). With reference to the above book, erosion and dilation filtering based on conventional mathematical morphology is described below.

Erosion filtering for a binary image, conventionally based on mathematical morphology, can be defined mathematically as follows: Let a window W, also referred to a structure element, consist of an image of elements (0;1) and let the binary image to be processed be I. The binary image $\overline{\text{I}}$ is scanned with the window W, and the pixel value in I at the centre of window W is replaced with 0, or null, unless all portions comprised of 1 in W are included in portions comprised of 1 in I. In other words, during the scan of the image with the structure element, hit/miss operations between 1's of the structure element and 1's of the image are performed, misses being marked by the insertion of null elements.

In contrast with the mathematical morphology applied to a binary image, which is the process based on the overlap between the structure element and the sub-image of 1's in the image, the extended erosion filter for a grey scale image transforms the pixel value of the image, which lies at the centre of a structure element, itself also a grey scale image, into the minimum difference between the values of the pixels in the structure element and the values of the corresponding pixels in the concerned image, during the scanning of the image by the structure element. The extended dilation filter transforms the pixel value of the concerned image at the centre of the structure into a function of the maximum sum to produce the minimum local dislocation.

Such an image analysis technique by the conventional mathematical morphology is used for feature extraction and measurement of spatial structures of binary and grey scale images. However, several problems are encountered when extending the applied field of this technique. The first one is in how to extend it to the grey scale. Although a spatial position of a pixel in an image and the pixel value are of different dimensions, the mathematical morphology for binary images has been extended to one for grey scale images by regarding the pixel value as the Z coordinate in an (X,Y,Z) co-ordinate system, where the (X, Y) coordinates are spatial co-ordinates. Also, there is a limitation implied in handling a binary image since the theory considers only the case of the addition of noise to the original image.

The following is a list of some of the problems encountered when applying typical conventional technologies to specific types of image processing:-

(1) Image restoration and noise reduction;

The major conventional technique considers a set of simple binary values as an image model, and considers only "Markovness" as an additional constraint to the image model because of the Markov random field (for example, refer to IEEE Transaction on Pattern Analysis and Machine Intelligence, Jan., 1985). Image restoration by the Markov random field constraint requires convergent calculation, i.e., it implies a large calculation overhead.

For document image restoration using an image model similar to that taken for the present invention, attention is drawn to a proposal by Minou and Sakai for processing a binary image. They propose a restoration technique of a document image by a MOLD (Mesh Oriented Line Drawing) model. In the MOLD model, it is proposed to prepare combinations of eight neighbourhoods of 3 × 3 pixels, which define the theoretically acceptable conditions i.e., are "legal", and to restore an image through checking of the image based on those combinations. If one accepts legal pattern matching, it is impossible to extend the processes to multi-valued image processing.

An image restoration process using a smoothing filter (a moving average or mode filter) based on the eight neighbourhood is unstable because the model accepted as the premise of the process, is vague. For example, in the mode filter, on one occasion a certain value becomes the output of the filter even if the frequency of the appearance of the value is 2, and on another occasion the value doesn't become the output even if the frequency is 4.

(2) Automatic generalisation of a map;

There are two main processes in existing automatic map generalisation.

In one prior conventional method, a vector map is first generated from an image map, and then simplification is performed based on the vector map (for example, refer to IBM Journal of Research & Development, Vol. 26, No, 6, pp. 715 - 723). This method is not effective if the image is complicated, and has an additional problem in that it does not match existing standards for mapping.

The other main process is based on an image and involves a method in which continuous regions having a larger number of pixels than a predetermined value are left (Remote Sensing of Environment). Such process has two problems in that it does not match the mapping standards, as with the above method based on the vector map, and further in that the process itself is complex.

Additionally, there is a method using a smoothing filter, but it has all the problems of the processes described above.

(3) Simplification for image pattern recognition;

There are many approaches using spatial relations in the image recognition. These approaches are also called texture analysis, and various methods are known. The major prior technique is to use spatial statistics, for example, an average value in a window. However, such a method has a problem in that digital data indicative of spectral information of objects is processed only in relation to local neighbourhood details, i.e., independently of the complete objects per se, and fails to sufficiently reflect the size of the objects in the recognition process as an independent element.

(4) Simplification of an image;

When an image is displayed on an image display, there arise two problems of intelligibility and deterioration of display brightness if the image to be displayed is too complicated. Therefore, it is required to simplify the image in accordance with the resolution of display and the display work environment so as to improve the display work environment.

(5) Stabilisation of reduction process on a digital copier;

While there is a tendency to increase digital preprocessing of images in copiers, if only a simple reduction process is performed, there arises the problem that results become unstable. Namely, simple thinning-out, such as of ruled lines, results in either only ruled lines remaining, or, conversely, no ruled lines remain. Therefore, it becomes required to provide preprocessing of an image allowing for stable weighting for each pixel value.

(6) Preprocessing for data compression;

A scanner is affected by various noise factors in the course of reading by scanning. Such noise causes significant deterioration of subsequent data compression efficiency. Effective noise reduction and restoration of an image, particularly as applied to the preprocessing of office documents including printed material,is needed.

The present invention is devised in view of the above circumstances, and has an object to provide a basic configuration and counterpart method for performing image (pre)processing operations based on mathematical morphology extended naturally to multi-valued images.

The present invention provides image processing apparatus for processing an image defined in terms of multi-valued pixels and including an erosion filter and a dilation filter, each arranged to operate within a respective window which is scanned progressively over the image to be processed, the erosion filter, for each position of its window, determining the value of the pixel a first check position fixed relative to that window, determining the values of the other pixels in that window, determining if there are at least a predetermined number of said other pixels of the same value as the pixel at the check position and, if not, setting the pixel at the first check position to a null value, the predetermined number being adjustable and related to the size of the window; the dilation filter, for each position of its window, determining if the value of the pixel a second check position, fixed relative to that window, is the null value and, if so, determining the values of the other pixels in that window, determining the most frequently occurring other pixel value and setting the pixel value at the second check position to the determined most frequently occurring value for that window in that position.

Such apparatus provides a basic configuration for image operations supported by the extended mathematical morphology.

The present invention also provides a counterpart image processing method.

Such a method works well when applied to a case where it is possible or required to take an image model, in which

(a) objects in an image have a predetermined size (a structure element of a minimum unit) or a larger one, and

(b) the pixel values are identical in the minimum unit as long as no noise is added to the image. Therefore, the applied field of this method can include

    (1) restoration or noise reduction of printed material or a document image,

    (2) automatic generalisation of a map satisfying mapping standards (for example, the specifications on land use maps prescribed by the Geographical Survey Institute) from an image map such as a land use map or land cover map obtained from resource survey satellite images,

(3) simplification of an image for pattern recognition,

(4) simplification of an image for improving intelligibility or preventing deterioration of brightness on an image display,

(5) a pre-process for stabilising reduction in a digital copier, and

(6) a preprocess for compressing data in image communication.

The embodiments of the invention described hereinafter use, turn and turn about, erosion filtering and dilation filtering to attain the above objects.

The erosion filter determines the frequency that a pixel having the same value as a pixel at first check position of a first window appears in that window. If the frequency of appearance is equal to or less than a value predetermined for the pixel value of the first check position, the pixel value at the first check position is made null. Such an operation is recursively executed while scanning the multi-valued image to be processed with the first window.

The dilation filter replaces any null pixel value at a second check position of a second window with a particular one of the non-null pixel values appearing in the second window. The non-null value is the one having the maximum frequency of appearance in the second window. Such an operation is recursively executed while scanning the multi-valued image to be processed with the second window.

The operation of the erosion filter and the dilation filter are mathematically described, as follows:

The multi-valued image I is considered to be the composite of a set of images Ik, each Ik corresponding to that sub-image comprised of pixels of value k, so that each Ik, being the size of the complete image I, has pixel values of K and null only. That is, it can be expressed as:

$$I = U_k I_k, \text{ where } I_k = \{ (p, k) \mid v(p) = k \}.$$

where p is any coordinate position, v(p) is the pixel value at the coordinate position p.

A structure element S is any (null, 1) image, and the structure is defined by the "1" portions of S. The translate Sp of S by p is defined as follows:

$$S_p = \{ a + p \mid a \in S \}.$$

and enables one to mathematically define a window scanning an image.

It is possible to define the erosion filter and the dilation filter, extended to a multi-valued image and based on majority logic, as follows:

The extended erosion process of the image I by the structure element S can be defined as:

$$I \ominus S = \{ (p, k) \mid \| I_k \cap S_p \| > t_k, \text{ where } v(p) = k \}.$$

where, $I_k \cap S_p$ represents the number of pixels of value k in the area common to the sub-image $I_k$ of the image I and the structure element S. This can be equated in words to scanning the image I with the structure element S as the window; retaining the pixel value at the centre position of the window if the number of appearances of that pixel value in the window is $t_k$ or more, and otherwise changing it the null value, that is, effectively deleting it.

Similarly, the extended dilation process for the image I by the structure element S can be defined as:

$$I \oplus S = \{ (p, k) \mid \max k \mid I_k \cap S_p \mid \}.$$

This can be equated in words to replacing the pixel value at the centre position of the window with the non-null pixel value that appears the maximum number of times in the window.

In terms of a method, it can be said that the present invention first reconstructs an image only with pixel values dominant in the window. In terms of the above image model, the pixel values are assumed to be the same in the structure element of a minimum unit, and, if they are not same, it is assumed that noise is added to the image, so that it is considered that the reconstruction reduces main noise. The reconstruction can be executed by replacing the pixel values which are not locally dominant with null values, using erosion filtering, followed by replacing the null pixel values with pixel values which are locally dominant, using dilation filtering.

In more general terms, as particularly described hereinafter, the frequency that a pixel having the same pixel value as the pixel at a first check position of the erosion filter appears is first determined. The window consists of the structure element of the predetermined minimum unit. The pixel value at the first check position is changed to null, when the frequency is less than a threshold value predetermined for the pixel value at the first check position. Each threshold is set to less than 100% of the number of all pixels in the erosion filter window. This operation is repeatedly executed at each position of the window as it is progressively moved over the image to scan the same.

Since the threshold can be set independently for each pixel value, it is possible to weight the pixel values. Once the nulls have been set, the method switches to dilation filtering, in which,if the pixel value at a second check position in a first dilation filter window is null, that pixel value is replaced with that non-null pixel value which appears most frequently in the current position of the dilation filter window. This operation is repeatedly executed at each position of the dilation filter as it is moved to scan the image so that null pixels are substantially eliminated from the multi-valued image (a position may show all nulls).

The method then returns to erosion filtering, using a window size that is smaller than was used on the first erosion filtering, and finally returns to dilation filtering using a window size that is larger than that used for the second erosion filtering. Since, in the above image model, the objects contained in the image are larger than the predetermined size (the structure element of the minimum unit), such reconstruction can be performed. This enables one to simplify the image as reconstruction can be executed by making null the pixel regions that are less than a predetermined size, using erosion filtering and replacing the null pixels with non-null pixel values in the neighbourhood using dilation filtering.

As more particularly described hereinafter, in the second erosion filtering scan, the pixel at the first check position is made null when one or more pixels differ from it.

The check position that is used for the second dilation filtering scan need not be in the same position with respect to the window as obtained on the first dilation filtering scan.

The erosion filtering window size on the first scan is equal to the size of structure element of the minimum unit not only where an image is reconstructed with same colour regions having the minimum size or larger, but also where an image is reconstructed with locally dominant pixel values. In the above image model, the region specified by the dominant pixel values can be considered to be essentially identical with the region of an object. It is because the former can be considered to be the latter added with noise. Therefore, the erosion filter having the size of the structure element of the minimum unit is used also when an image is reconstructed with the locally dominant pixel values.

It is pointed out that window sizes and thresholds are essentially adjustable and so can be tuned to particular applications and to particular phases of individual applications.

The present invention will be described further by way of example with reference to embodiments thereof as illustrated in the accompanying drawings, in which:

Figure 1 is a block schematic diagram of one embodiment of the invention which can be regarded as a noise reduction and restoration unit;

Figure 2 is a flow-chart showing the processes performed in the embodiment of Figure 1;

Figure 3 is a block diagram of the erosion filter of Figure 1;

Figure 4 is a block diagram of the dilation filter of Figure 1;

Figures 5 to 13 are diagrams illustrating the operation of the noise reduction and restoration unit of Figure 1; and

Figures 14 and 15 are flowcharts showing other embodiments of the invention.

In order to provide a context for that embodiment of the invention now to be described, it is assumed that it is required to automatically generate a map from satellite delivered images. The mapping rules include colour coding of land use categories, such as forest and barren land, and for this purpose the statutory rules in force in Japan are assumed.

These rules are specified in the "25,000 : 1 Land Use Map Mapping Specifications", and the "25,000 : 1 Land Use Survey Work Regulations of the Geographical Survey Institute", by the Ministry of Construction, Article 5, General Mapping Specifications, which prescribes the selection and general representation of items to be represented on a land use map. These can be summarised as follows:

the minimum area unit on the map, i.e., the granularity of the map, is 1.00 mm; and if a same land use classification occupies 50%/70% or more of a given minimum area unit, that classification is deemed to cover all the unit. The minimum area unit and the ratio of mixture are pre-scribed for each land use classification in the detailed regulations.

In automatically generalising such a land use map, intermediate images are obtained by correcting images sent from a satellite and these images are considered to consist of a completed land use map with noise added thereto. The image processing of the present invention, which can be regarded, in this case, as noise reduction and image restoration, is applied to the intermediate images to obtain a clean image of land use map. If the minimum unit and the mixing ratio vary from category to category, the parameters (window size and threshold) of the filters are established accordingly.

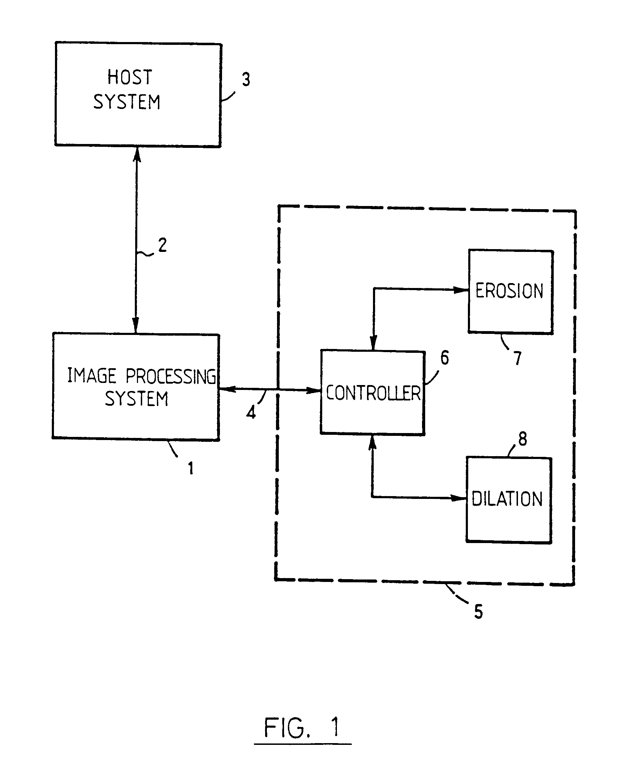

Figure 1 shows the embodiment as a whole, wherein an image processing system 1 is connected to a host system 3 through a channel 2. The image processing system 1 may be, for example, an image processing system 7350 manufactured by International Business Machines Corporation. The image processing system 1 is connected to a noise reduction/image restoration unit 5 through a line 4 (for example, a system bus of the image processing system 1). The noise reduction/image restoration unit 5 consists of a controller 6, an erosion filter 7, and a dilation filter 8.

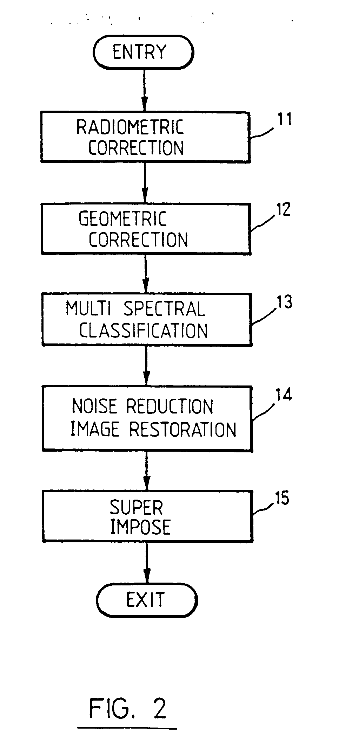

Figure 2 shows a process for automatically generalising a land use map. Images obtained from a satellite such as Landsat are first subjected to radiation correction (step 11). This correction includes calibration, that is correction based on correction values on the ground, and relative correction that resolves difference between several sensors. This is followed by geometric correction (step 12) and thereafter by supervised maximum likelihood multispectral classification (step 13). After this preliminary processing, noise reduction and restoration (step 14), the thrust of this embodiment of the present invention, takes place. After step 14, superimposition is performed to add roads, railways, administrative districts, and the like (step 15). Steps 11 - 13, and 15 are executed by resources of the host system 3 or the image processing system 1. Step 14 is executed by the noise reduction/image restoration unit 5.

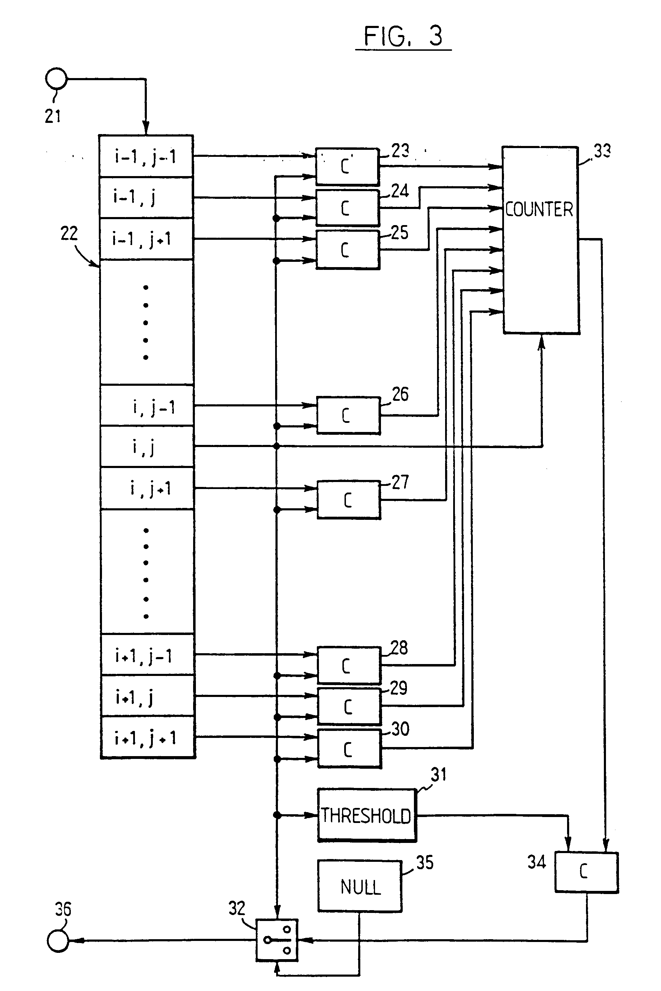

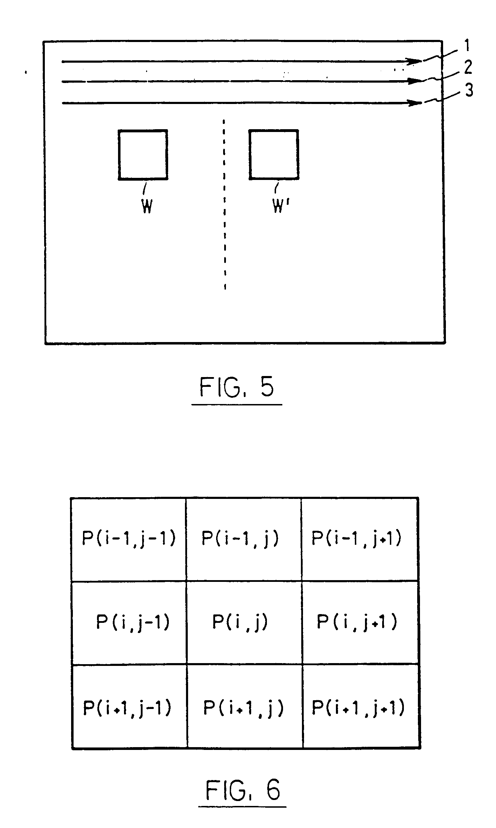

Figure 3 shows the erosion filter 7 of the noise reduction/image restoration unit 5. Input 21 of the erosion filter is supplied with image data stored in the host system 3 or the image processing system 1. The image data is for example colour codes representing the images, as sequentially sent out in the order of arrows (1), (2), (3) .... in Figure 5. The image data is supplied to a line buffer 22, and sequentially fed through the series of stages thereof. Stages (i - 1, j - 1), (i - 1, j), (i - 1, j + 1), (i, j - 1), (i, j + 1), (i + 1, j -1), (i + 1, j) and (i + 1, j + 1) of the line buffer 22 are connected to first inputs of comparators 23, 24, 25, 26, 27, 28, 29, and 30 respectively, while stage (i, j) is connected to second inputs of the comparators 23 - 30, and also to a threshold generator 31. The stage (i, j) is also connected to first switching terminal of a switch 32. Outputs of the comparators 23 to 30 are connected to a counter 33, the output of which is connected to a first input of a comparator 34. A second input of the comparator 34 is connected to an output of the threshold generator 31, while output of the comparator 34 is connected to a control input of the switch 32. A second switching terminal of switch 32 is connected to an output of a null signal generator 35, while an output of the switch 32 is connected to an output 36 of the erosion filter.

In this configuration, stages (i - 1, j - 1), (i - 1, j), (i - 1, j + 1), (i, j - 1), (i, j), (i, j + 1), (i + 1, j - 1), (i +1, j) and (i + 1, j + 1) of the line buffer 22 correspond to a window (W in Figure 5) consisting of nine pixels of 3 rows × 3 columns. That is, the stages (i - 1, j - 1) ... (i + 1, j + 1) store pixel data p (i - 1, j - 1) ... p (i + 1, j + 1) shown in Figure 6, respectively, which are supplied to the corresponding comparators 23 - 30. Because the image data is sequentially transferred through the line buffer 22, the pixel data inputted into the comparators 23 - 30 changes sequentially. Pixel data inputted into the comparators 23 to 30 at a certain time are defined by W in Figure 5, while those inputted into the comparators 23 to 30 at predetermined time delayed from that time are defined by W′.

Although as described, the window consists of 3 rows × 3 columns "square" of a centre pixel and eight neighbour pixels for the convenience of description, it should have a round shape of 1 mm or 2 mm for actual generalisation of a land use map, which implies considerably more pixels, stages and comparators than are shown, not only to accommodate the "shape" but also to accommodate the size of the window being varied in accordance with the value of the centre pixel p (i, j). No attempt is made to describe this in its full complexity since it can be appropriately designed by those skilled in the art.

The comparators 23 - 30 compare the pixel values p (i - 1, j - 1), p (i - 1, j), p (i - 1, j + 1), p (i, j - 1),p (i + 1, j - 1), p (i, j + 1), p (i + 1, j), and p (i + 1, j + 1) of eight neighbourhoods in Figure 6 with the centre pixel value of p (i, j), respectively. The counter 33 consists of a combination circuit, and generates a counter output indicating the number of coincidence outputs. The threshold generator 31 receives the centre pixel value p (i, j), and outputs a threshold corresponding to it. In the case of creation of the land use map, the threshold is determined to lie in the range 50% to 70% (for the first scan majority logic filtering to be described later), and 100% (for the second scan minimum area filtering to be described later) in order to accommodate the above-mentioned "regulations". The number of coincidence outputs is compared with the threshold 31 in the comparator 34. If the number of coincidence outputs is equal to or larger than the threshold, the switch 32 connects the centre pixel value p (i, j), the first switching terminal, to the output 36. On the other hand, if the number of coincidence outputs is less than the threshold, the switch 32 connects a null signal,the second switching terminal, to the unit output 36.

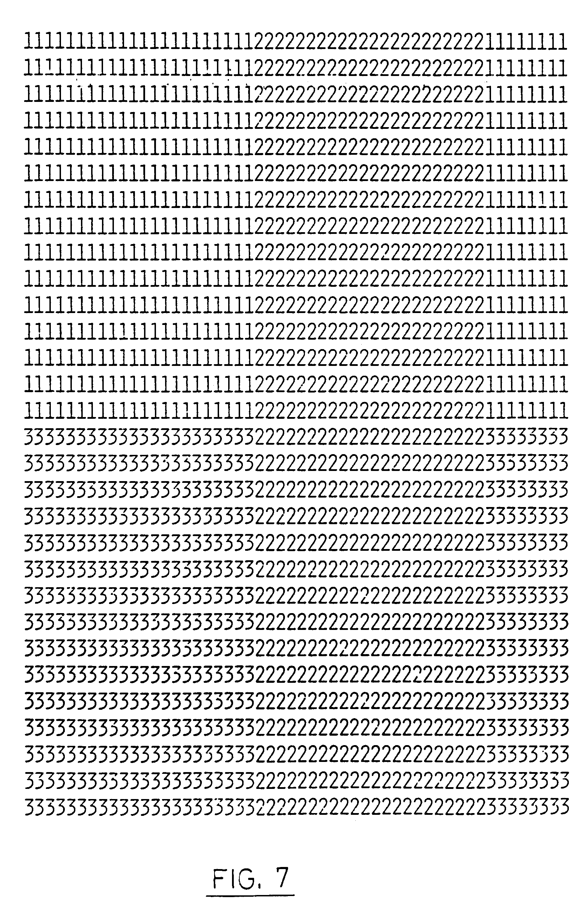

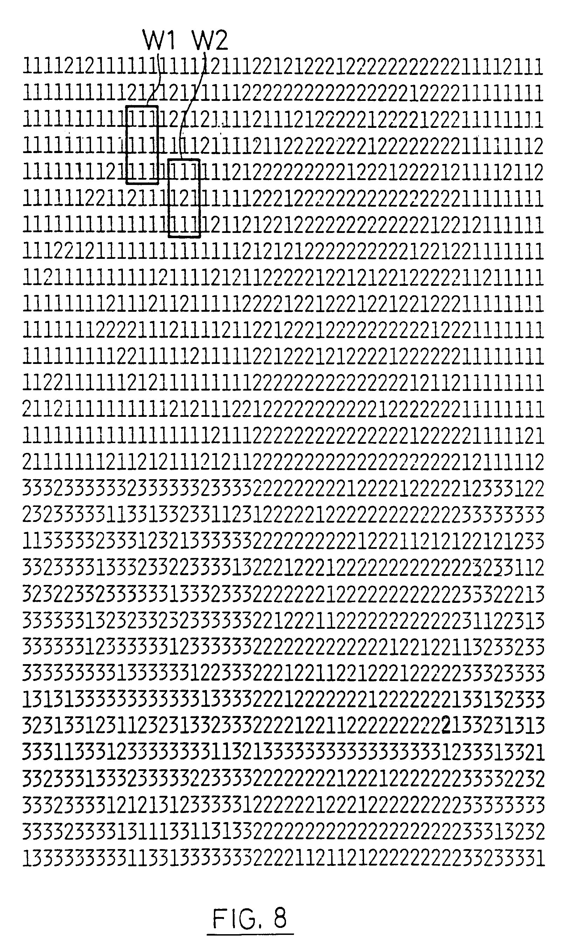

Figure 7 shows a part of final target image, taken purely as an example. The image to be processed is shown in Figure 8, in an effort to reach the final target image, consists of the image of Figure 7 and noise randomly added thereto at about one part noise to three parts target image. The threshold is 50%, or 4 for the example of eight neighbourhoods. 1, 2, and 3 in these figures indicate colour codes.

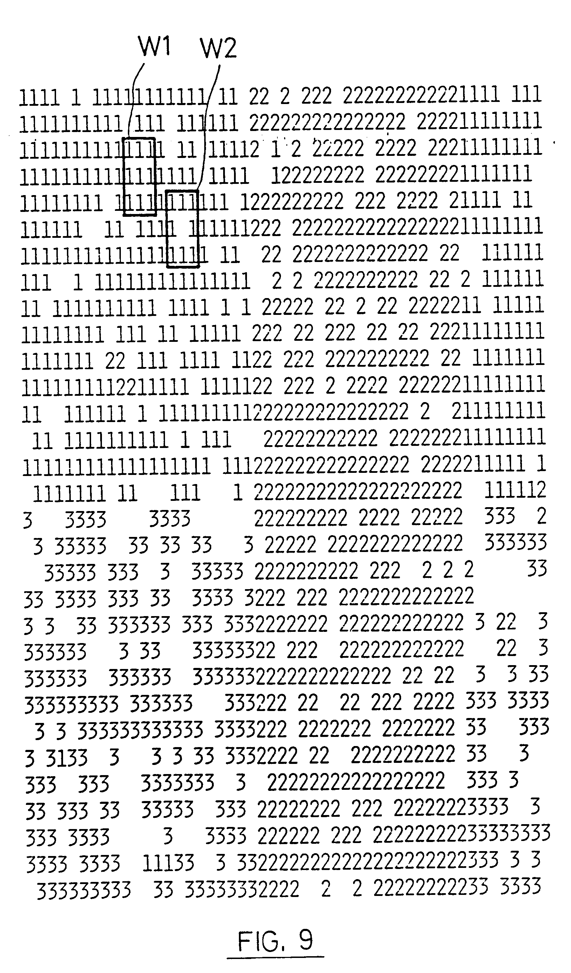

A window W1 of Figure 8 has the centre pixel value of 1, and the pixel value for eight neighbourhoods is also 1. Since 8 > 4 (threshold), the centre pixel value is outputted from the output 36 as it is. A pixel value of 1 is left at a corresponding position in Figure 9.

Another window W2 of Figure 8 has the centre pixel value of 2, and the pixel value for eight neighbourhoods is 1. Since 0 < 4 (threshold), the centre pixel value is replaced by a null value. This is shown in Figure 9.

Such an operation is performed for each pixel in the image,(with the possible exception of the outermost boundary pixels as is conventionally deemed acceptable), and provides the image of Figure 9 as the result.

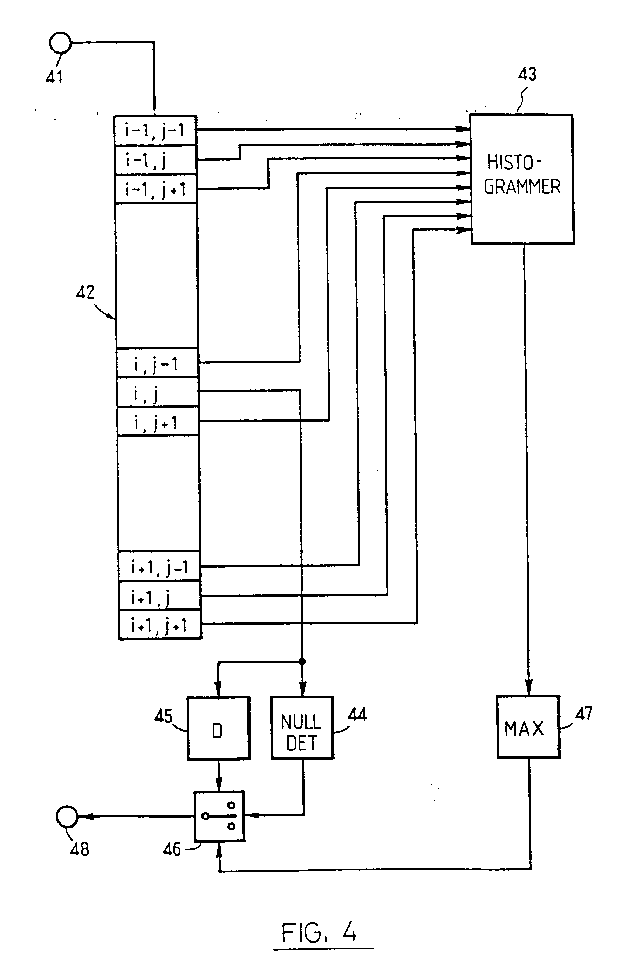

Referring to Figure 4, an input 41 of the dilation filter is supplied with image data in a same manner that it is supplied to the input 21 of the erosion filter of Figure 3. The input 41 is connected with a line buffer 42, and image data in stages (i - 1, j - 1), (i - 1, j), (i - 1, j + 1), (i, j - 1), (i, j + 1), (i + 1, j - 1), (i + 1, j), and (i + 1, j + 1) of the line buffer 42 is supplied to a histogrammer 43. A stage (i, j) is supplied to a null signal detector 44, and also to a first switching terminal of a switch 46 through a delay circuit 45. The delay circuit 45 offsets the delay caused when data passes through the histogrammer 43 and a maximum value detector 47. Output of the histogrammer 43 is supplied to the maximum value detector 47. That pixel value having the maximum frequency of appearance in the current position of the window is outputted from the maximum value detector 47, and supplied to a second switching terminal of the switch 46. Output of the null signal detector 44 is supplied to a control input of the switch 46. When the null signal detector 44 detects a null signal, the switch 46 activates the second switching terminal, and that pixel value having the maximum frequency is outputted from an output 48 of the dilation filter. On the other hand, if the null signal detector 44 does not detect a null signal, the switch 46 activates the first switching terminal, and the centre pixel value is outputted from the output 48.

For example, since, in Figure 9 mentioned above, the centre pixel value of the window W 1 is 1 (non-null), 1 is outputted from the output 48 as it is. On the other hand, in the window W 2, the centre pixel is null, and all eight neighbourhood pixels are 1. Therefore, the pixel with the maximum value is 1, and 1 is outputted from the output 48. If all pixels in the window are null, a null signal is outputted from the output 48. In the dilation filter 8, null pixels may still remain after a single scanning of the image so that the process is repeated.

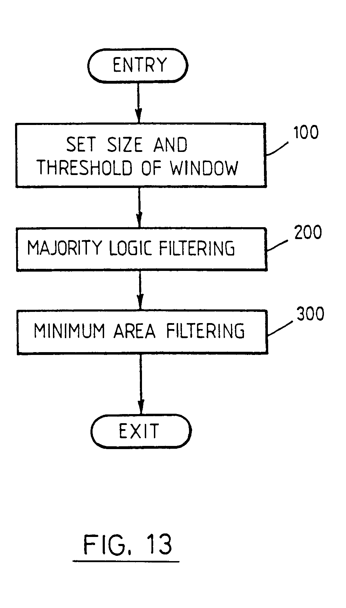

The sequence of operations is described with reference to Figure 13. While some of individual operations have already been described, they are described in duplicate for the convenience.

(1) Establishment of the size and the threshold of the window (step 100)

The size and the threshold of the window are established for each centre pixel value as determined by the land use category corresponding to it. The establishment is performed through the entry device of image processing system 1, or by an application program on the host system 3. The controller 6 of the noise reduction/image restoration unit 5 controls the erosion filter 7 and the dilation filter 8 based on the data established in such manner.

(2) Majority logic filtering (step 200)

The erosion filter 7 processes an image according to the size and the threshold of the window established in step 100. For example, an image with added noise, as shown in Figure 8, is processed by a window of size 3 rows × 3 columns and the threshold of 50%. An image as shown in Figure 9 is obtained. In this image, pixels not dominant in the window are already changed to null, and therefore the noise portion is made null. The dilation filter 8 operates with the same size of the window. This process is repeated to eliminate null portions from the image. The size of the filter may be incremented during the repeat which can reduce the number of repeats required. If the null portions still remain, these may be removed by returning to the corresponding pixel values of the originally presented image plus noise.

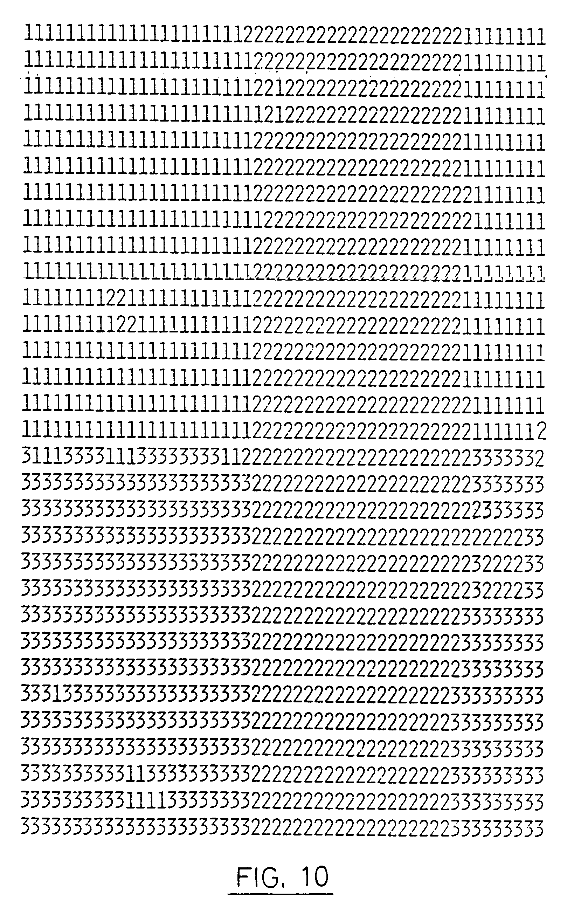

Figure 10 shows the image after dilation process. The image consists of only pixels dominant in the window, so that main noise is removed.

(3) Minimum area filtering (step 300)

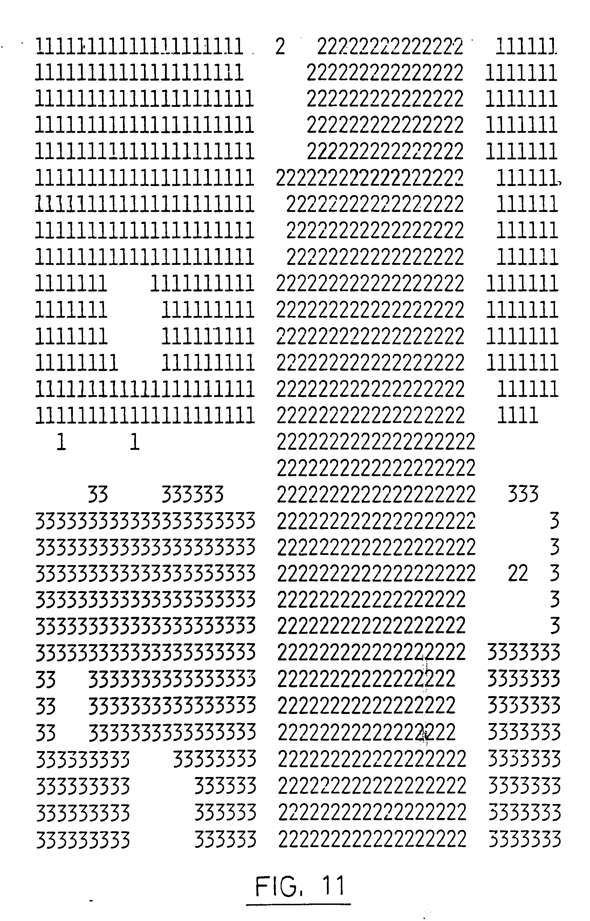

This is executed for the image from which main noise is already removed by the majority logic filtering. The image is processed by the erosion filter 7 using the window size established in step 100. However, the threshold is automatically set at 100%. This process provides an image shown in Figure 11.

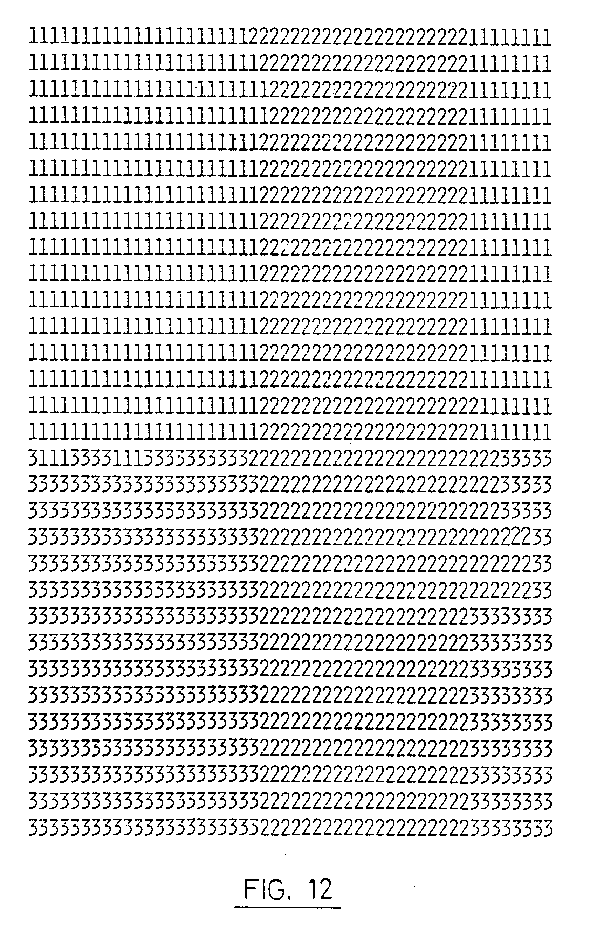

The image is further processed by the dilation filter 8 using the window size established in step 100. This provides an image, for example, as shown in Figure 12. In this process, pixel value regions smaller than the size of window are made null by the erosion filter 7, and then replaced with the pixel value of the neighbourhood by the dilation filter 8 based on the premise that pixel value regions smaller than the size of the window are not true objects in the image but are false objects caused by noise. The process can eliminate such "false" objects from the image. The image of Figure 12 is an image restored by a series of operations, which is substantially same as the original image before addition of noise (Figure 7).

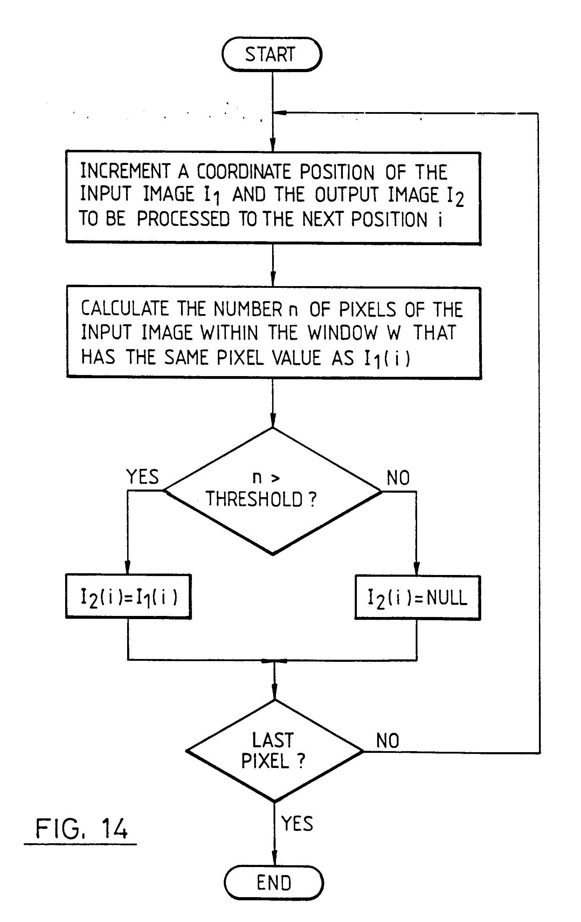

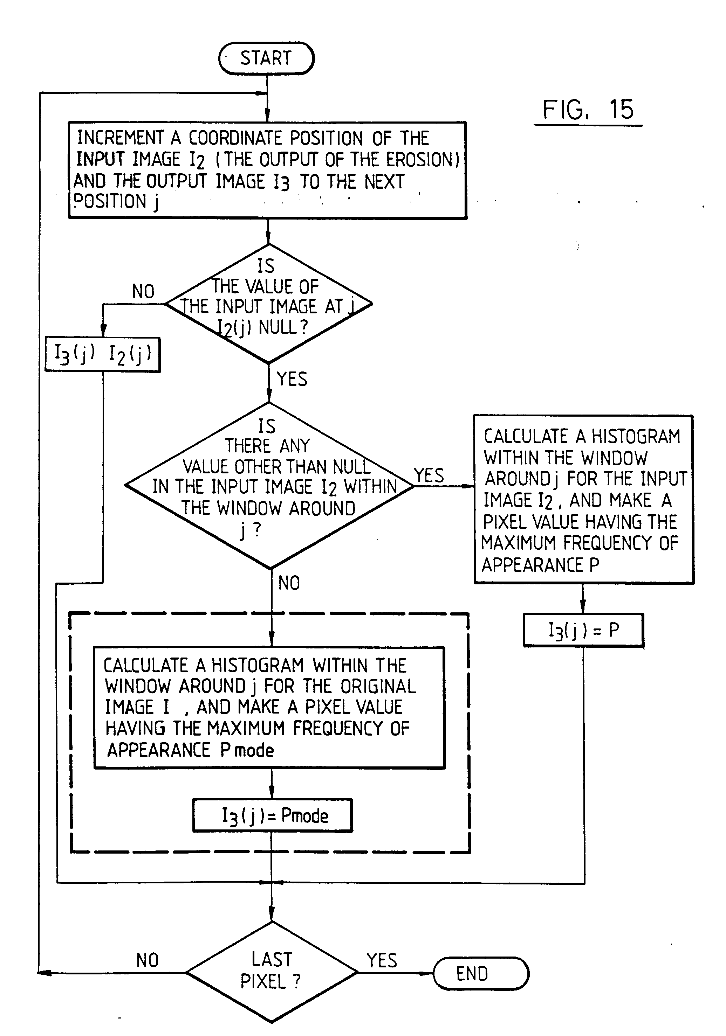

Although, in the above embodiment, the noise reduction/restoration unit 5 is implemented in hardware, it could, of course, be implemented in software. For example, Figure 14 and 15 show a software implementation of the major portions of noise reduction/restoration unit 5 on IBM 3081K processor under the operating system VM/CMS using VS FORTRAN language. Figure 14 shows the erosion processing of an image, while Figure 15 shows the dilation processing of the image. The area enclosed by dotted line is the previously mentioned procedure for reducing the number of scanning operations performed. In principle, it may however be arranged to repeat the scanning until there is no null value. It is believed that the methods of Figures 14 and 15 are clear from the face of those Figure and no additional description is given.

The invention enables restoration of an image by a local process without repetitive calculation. Furthermore the local process is based on a noise model that is very common in the field of restoring the image (the noise model that is the premise here is a model simply assuming that correct output elements occur more frequently than do the incorrect ones). This enables to remove notch or blurr on a binary image that is presently normal.

Also, individual weighting (degree of interest) can be provided for each pixel value of a multi-valued image having discrete values, by two parameters, so that spatial resolution for such an image can be freely varied.

As applied to mapping, while conventional techniques remain impractical because they cannot conform to existing regulations, the use of the above described technique makes it possible to automatically generalise a map from satellite images, or a map to a small scale from one to a large scale.

## Claims

1. Image processing apparatus for processing an image defined in terms of multi-valued pixels and including an erosion filter (7) and a dilation filter (8), each arranged to operate within a respective window which is scanned progressively over the image to be processed, the erosion filter, for each position of its window, determining the value of the pixel a first check position fixed relative to that window, determining the values of the other pixels in that window, determining if there are at least a predetermined number of said other pixels of the same value as the pixel at the check position and, if not, setting the pixel at the first check position to a null value, the predetermined number being adjustable and related to the size of the window; the dilation filter, for each position of its window, determining if the value of the pixel a second check position, fixed relative to that window, is the null value and, if so, determining the values of the other pixels in that window, determining the most frequently occurring other pixel value and setting the pixel value at the second check position to the determined most frequently occurring value for that window in that position.

2. Apparatus as claimed in claim 1, wherein the erosion filter predetermined number is adjusted in relation to the actual pixel value at the first check position for the current position of its window.

3. Apparatus as claimed in claim 1 or claim 2, wherein the size of the erosion filter window, at a position thereof, is adjusted in relation to the actual pixel value determined to be at the first check position therein, before any resetting thereof.

4. Apparatus as claimed in any preceding claim arranged to apply the erosion filter to the image to be processed, followed by the dilation filter, followed by the erosion filter, followed by the dilation filter; this four-stage iteration comprising the processing of the image to be processed, the predetermined numbers used by the erosion filter in its second scan of the image to be processed being higher than those used in its first scan of the image.

5. An image processing method for processing an image defined in terms of multi-valued pixels by erosion filtering and subsequent dilation filtering, each within a respective window which is scanned progressively over the image to be processed, and, during erosion filtering, for each position of its window, determining the value of the pixel a first check position fixed relative to that window, determining the values of the other pixels in that window, determining if there are at least a predetermined number of said other pixels of the same value as the pixel at the check position and, if not, setting the pixel at the first check position to a null value, the predetermined number being adjustable and related to the size of the window; and, during dilation filtering, for each position of its window, determining if the value of the pixel a second check position, fixed relative to that window, is the null value and, if so, determining the values of the other pixels in that window, determining the most frequently occurring other pixel value and setting the pixel value at the second check position to the determined most frequently occurring value for that window in that position.

6. A method as claimed in claim 5, wherein the erosion filtering predetermined number is adjusted in relation to the actual pixel value at the first check position for the current position of its window.

7. A method as claimed in claim 5 or claim 6, wherein the size of the erosion filtering window, at a position thereof, is adjusted in relation to the actual pixel value determined to be at the first check position therein, before any resetting thereof.

8. A method as claimed in any of claims 5, 6 and 7, wherein erosion filtering is performed on the image to be processed, followed by dilation filtering, possibly repeated, followed by erosion filtering, followed by dilation filtering; this four-stage iteration comprising the processing of the image to be processed, the predetermined numbers used during erosion filtering in its second application being higher than those used in its first application.

**Revendications**

1. Appareil de traitement d'image pour le traitement d'une image définie en termes de points d'image ou pixels de valeurs multiples et comprenant un filtre d'érosion (7) et un filtre d'expansion (8), prévus chacun pour fonctionner à l'intérieur d'une fenêtre respective qui est balayée progressivement sur l'image à traiter, le filtre d'érosion, pour chaque position de sa fenêtre, déterminant la valeur du pixel à une première position de contrôle fixe par rapport à cette fenêtre, déterminant les valeurs des autres pixels dans cette fenêtre, déterminant s'il y a au moins un nombre prédéterminé dedits autres pixels de la même valeur que le pixel situé à la position de contrôle et, si ce n'est pas le cas, établissant le pixel situé à la première position de contrôle à une valeur nulle, le nombre prédéterminé étant ajustable et lié à la dimension de la fenêtre ; le filtre d'expansion, pour chaque position de sa fenêtre, déterminant si la valeur du pixel situé à une deuxième position de contrôle, fixe par rapport à cette fenêtre, est la valeur nulle et, si c'est le cas, déterminant les valeurs des autres pixels dans cette fenêtre, déterminant la valeur des autres pixels qui apparaît le plus fréquemment et établissant la valeur du pixel situé à la deuxième position de contrôle à la valeur déterminée apparaissant le plus fréquemment pour cette fenêtre dans cette position.

2. Appareil suivant la revendication 1, dans lequel le nombre prédéterminé du filtre d'érosion est ajusté en relation à la valeur de pixel effective à la première position de contrôle pour la position en cours de sa fenêtre.

3. Appareil suivant la revendication 1 ou la revendication 2, dans lequel la dimension de la fenêtre du filtre d'érosion, à une position de celle-ci, est ajustée en relation à la valeur de pixel effective déterminée comme existant à la première position de contrôle dans la fenêtre, avant tout changement de celle-ci.

4. Appareil suivant l'une quelconque des revendications précédentes, agencé pour appliquer le filtre d'érosion à l'image à traiter, suivi par le filtre d'expansion, suivi par le filtre d'érosion, suivi par le filtre d'expansion ; cette itération en quatre stades constituant le traitement de l'image à traiter, les nombres prédéterminés utilisés par le filtre d'érosion dans son deuxième balayage de l'image à traiter étant plus élevés que ceux qui sont utilisés dans son premier balayage de l'image.

5. Méthode de traitement d'image pour traiter une image définie en termes de pixels de valeurs multiples par filtrage d'érosion puis filtrage d'expansion, chacun à l'intérieur d'une fenêtre respective qui est balayée progressivement sur l'image à traiter, et, pendant le filtrage d'érosion, pour chaque position de sa fenêtre, détermination de la valeur du pixel situé à une première position de contrôle fixe par rapport à cette fenêtre, détermination des valeurs des autres pixels dans cette fenêtre, détermination s'il y a au moins un nombre prédéterminé dedits autres pixels de la même valeur que le pixel situé à la position de contrôle et, si ce n'est pas le cas, établissement du pixel situé à la première position de contrôle à une valeur nulle, le nombre prédéterminé étant ajustable et lié à la dimension de la fenêtre : et, pendant le filtrage d'expansion, pour chaque position de sa fenêtre, détermination si la valeur du pixel situé à une deuxième position de contrôle, fixe par rapport à cette fenêtre, est la valeur nulle et, si c'est le cas, détermination des autres valeurs des autres pixels dans cette fenêtre, détermination de la valeur des autres pixels qui apparaît le plus fréquemment et établissement de la valeur de pixel, à la deuxième position de contrôle, à la valeur déterminée apparaissant le plus fréquemment pour cette fenêtre dans cette position.

6. Méthode suivant la revendication 5, dans laquelle le nombre prédéterminé du filtrage d'érosion est ajusté en relation à la valeur de pixel effective à la première position de contrôle, pour la composition en cours de sa fenêtre.

7. Méthode suivant la revendication 5 ou la revendication 6, dans laquelle la dimension de la fenêtre de filtrage d'érosion, à une position de celle-ci, est ajustée en relation à la valeur de pixel effective déterminée comme existant à la première position de contrôle dans la fenêtre avant tout changement de celle-ci.

8. Méthode suivant l'une quelconque des revendications 5, 6 et 7, dans laquelle le filtrage d'érosion est effectué sur l'image à traiter, suivi par un filtrage d'expansion, éventuellement répété, suivi par un filtrage d'érosion, suivi par un filtrage d'expansion ; cette itération en quatre stades constituant le traitement de l'image à traiter, les nombres prédéterminés utilisés pendant le filtrage d'érosion dans sa deuxième application étant plus élevés que ceux qui sont utilisés dans sa première application.

**Patentansprüche**

1. Einrichtung für Bildverarbeitung zum Verarbeiten eines mittels mehrwertiger Pixel definierten Bildes, die ein Erosionsfilter (7) und ein Dilatationsfilter (8) aufweist, wobei jedes eingerichtet ist, um innerhalb eines entsprechenden Fensters zu arbeiten, das stufenweise über das zu verarbeitende Bild abtastet, das Erosionsfilter für jede Position seines Fensters den Wert des Pixels bei einer ersten, bezüglich jenes Fensters festen Prüfposition bestimmt, die Werte der anderen Pixel in jenem Fenster bestimmt, bestimmt, ob es zumindest eine vorbestimmte Anzahl der anderen Pixel mit demselben Wert gibt, wie das Pixel bei der Prüfposition und falls nicht, das Pixel bei der ersten Prüfposition auf einen Null-Wert setzt, wobei die vorbestimmte Anzahl eingestellt werden kann und in Beziehung zu der Größe des Fensters steht, das Dilatationsfilter für jede Position seines Fensters bestimmt, ob der Wert des Pixels bei einer zweiten bezüglich jenes Fensters festen Prüfposition der Null-Wert ist und falls ja, die Werte der anderen Pixel in jenem Fenster bestimmt, den am häufigsten auftretenden anderen Pixelwert bestimmt und den Pixelwert bei der zweiten Prüfpositon auf den bestimmten, am häufigsten auftretenden Wert für jenes Fenster in jener Position setzt.

2. Einrichtung nach Anspruch 1, bei welcher die vorbestimmte Anzahl bei dem Erosionsfilter bezüglich des aktuellen Pixelwertes bei der ersten Prüfposition für die aktuelle Positon seines Fensters eingestellt ist.

3. Einrichtung nach Anspruch 1 oder Anspruch 2, bei welcher die Größe des Erosionsfilterfensters bei einer Position von ihm bezüglich des aktuellen Pixelwertes eingestellt ist, der bei der ersten Prüfposition darin bestimmt ist, bevor sie zurückgesetzt wird.

4. Einrichtung nach irgendeinem vorgehenden Anspruch, die eingerichtet ist, auf das zu verarbeitende Bild das Ersosionsfilter anzuwenden, welchem das Dilatationsfilter folgt, welchem das Erosionsfilter folgt, welchem das Dilatationsfilter folgt, wobei diese vierstufige Iteration das Verarbeiten des zu verarbeitenden Bildes umfaßt und die vorbestimmten Zahlen, die von dem Erosionsfilter bei seiner zweiten Durchführung einer Abtastung des zu verarbeitenden Bildes verwendet werden, größer sind als jene, die bei seiner ersten Durchführung einer Abtastung des Bildes verwendet werden.

5. Verfahren zum Verarbeiten eines Bildes, um ein Bild zu verarbeiten, das mittels mehrwertiger Pixel durch Erosionsfiltern definiert ist und nachfolgendes Dilatationsfiltern, wobei jedes innerhalb eines entsprechenden Fensters erfolgt, das stufenweise über das zu verarbeitende Bild abtastet und während des Erosionsfilterns für jede Position seines Fensters den Wert des Pixels bei einer ersten, bezüglich jenes Fensters festen Prüfposition bestimmt wird, die Werte der anderen Pixel in jenem Fenster bestimmt werden, bestimmt wird, ob es zumindest eine vorbestimmte Anzahl der anderen Pixel mit demselben Wert gibt, wie das Pixel bei der Prüfpositon und falls nicht, das Pixel bei der ersten Prüfposition auf einen Null-Wert gesetzt wird, wobei die vorbestimmte Anzahl eingestellt werden kann und in Beziehung zu der Größe des Fensters steht, während des Dilatationsfilterns für jede Position seines Fensters bestimmt wird, ob der Wert des Pixels bei einer zweiten, bezüglich jenes Fensters festen Prüfposition der Null-Wert ist und falls ja, die Werte der anderen Pixel in jenem Fenster bestimmt werden, der am häufigsten auftretende andere Pixelwert bestimmt wird und der Pixelwert bei der zweiten Prüfposition auf den bestimmten, am häufigsten auftretenden Wert für jenes Fenster in jener Position gesetzt wird.

6. Verfahren nach Anspruch 5, bei welchem die vorbestimmte Anzahl bei dem Erosionsfiltern bezüglich des aktuellen Pixelwertes bei der ersten Prüfposition für die aktuelle Position seines Fensters eingestellt wird.

7. Verfahren nach Anspruch 5 oder Anspruch 6, bei welchem die Größe des Erosionsfilterfensters bei einer Position von ihm bezüglich des aktuellen Pixelwertes eingestellt wird, der bei der ersten Prüfposition darin bestimmt ist, bevor sie zurückgesetzt wird.

8. Verfahren nach irgendeinem der vorgehenden Ansprüche 5, 6 und 7, bei welchem auf das zu verarbeitende Bild das Erosionsfiltern angewendet wird, welchem das Dilatationsfiltern folgt, das gegebenenfalls wiederholt wird, welchem das Erosionsfiltern folgt, welchem das Dilatationsfiltern folgt, wobei diese vierstufige Iteration das Verarbeiten des zu verarbeitenden Bildes umfaßt und die vorbestimmten Zahl, die während des Erosionsfiltern bei seiner zweiten Anwendung verwendet werden, größer sind als jene, die bei seiner ersten Anwendung verwendet werden.

FIG. 1

FIG. 2

## FIG. 3

FIG. 4

FIG. 5

| P(i−1,j−1) | P(i−1,j) | P(i−1,j+1) |
|:---:|:---:|:---:|
| P(i,j−1) | P(i,j) | P(i,j+1) |
| P(i+1,j−1) | P(i+1,j) | P(i+1,j+1) |

FIG. 6

```
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
11111111111111111111111122222222222222222222222211111111
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
33333333333333333333333322222222222222222222222233333333
```

## FIG. 7

17

W1  W2

```
11112121111111111111211112212122212222222222211112111
11111111112121211111112222222222222221222211111111
1111111111111112112111112111212222212222122211111111
1111111111111111112111112112222222212222222211111112
11111111121111111112122222222212221222212111112112
111111122112111121111112221222222222222222211111111
11111111111111111211212212222222222221221211111111
111221211111111111111212121222222222212212211111111
11211111111111211111212112222212221212212222211211111
11111111211112112111112222122122221221221222111111111
11111112222111211112112212221222222222221222111111111
11111111122111111211111122212221212222122222221111111
11221111112121111111111222222222222221211121111111
21121111111111121211112212222222222221222222211111111
1111111111111111111211112222222222222221222221111121
21111111121121211112121112222222222222222222212111112
33323333332333333233332222222221222212222212333122
2323333311331332331123122222122222222222222233333333
11333323331232133333322222222221222112121221211233
3323333133323332233331322212221222222222222233233112
3232233233333313332333222222122222222222233322213
3333331323233252333333221222112222222222231122313
3333331233333312333333222222222222221221221113233233
33333333313333331223332221221122122212222233323333
13131333333333331333322212222222122222221133132333
3231331231123231332333222212211222222222133231313
3331133312333333331132133333333333333331233313321
33233313332333332233332222222212221222222233332232
3332333312121312333331222222122212222222233333333
33332333313111331131332222222222222222222233313232
13333333331133133333322221121121222222222233233331
```

FIG. 8

18

W1   W2

```
1111 1 11111111111/11 22 2 222 222222222221111 111
1111111111/111 111111 222222222222222 222221111111111
1111111111111 11/11112 1 2 22222 2222 22211111111
111111111111111111/1111  122222222 22222222111111111
11111111 111111111 1222222222 222 2222 21111 11
111111  11 1111 111111222 2222222222222222221111111111
111111111111111111 11  22 2222222222222 22  111111
111  1 11111111111111  2 2 222222222 22 2 111111
11 1111111111 1111 1 1 22222 22 2 22 2222211 11111
11111111 111 11 11111 222 22 222 22 22 22211111111
1111111 22 111 1111 1122 222 222222222 22 1111111
11111111112211111 1111122 222 2 2222 22222211111111
11  111111 1 11111111112222222222222222 2  211111111
 11 1111111111 1 111   2222222222 22222221111111111
11111111111111111111 1112222222222222222 2222211111 1
 1111111 11   111   1 22222222222222222222  111112
3  3333   3333     222222222 2222 22222  333  2
 3 33333  33 33 33   3 22222 2222222222222  333333
  33333 333  3  33333 2222222222 222  2 2 2    33
33 3333 333 33  3333 3222 222 22222222222
3 3  33 333333 333 3332222222 222222222222 3 22  3
333333   3 33   33333322 222  222222222222   22  3
333333  333333  333333222222222222 22 22  3  3 33
33333333 333333   333222 22  22 222 2222 333 3333
 3 3 333333333333 3333222 2222222 2222222 33   333
3 3133 3   3 3 33 3332222 22  222222222 33    3
333  333   3333333 3  2222222222222222  333 3
33 333 33  33333  333 22222222 222 22222223333  3
333 3333    3   3333 222222 222 22222222233333333
3333 3333  11133  3 332222222222222222222222333 3 3
 333333333  33 33333332222  2  2 2222222233 3333
```

FIG. 9

19

```
1111111111111111111111222222222222222222222211111111
1111111111111111111111222222222222222222222211111111
1111111111111111111111221222222222222222222211111111
1111111111111111111111212222222222222222222211111111
1111111111111111111111222222222222222222222211111111
1111111111111111111111222222222222222222222211111111
1111111111111111111111222222222222222222222211111111
1111111111111111111111222222222222222222222211111111
1111111111111111111111222222222222222222222211111111
1111111111111111111111222222222222222222222211111111
1111111122111111111111222222222222222222222211111111
1111111122111111111111222222222222222222222211111111
1111111111111111111111222222222222222222222211111111
1111111111111111111111222222222222222222222211111111
1111111111111111111111222222222222222222222211111111
1111111111111111111111222222222222222222222211111112
3111333311133333333112222222222222222222223333332
3333333333333333333333222222222222222222222233333333
3333333333333333333333222222222222222222222233333333
3333333333333333333333222222222222222222222222222233
3333333333333333333333222222222222222222222223222233
3333333333333333333333222222222222222222222223222233
3333333333333333333333222222222222222222222233333333
3333333333333333333333222222222222222222222233333333
3333333333333333333333222222222222222222222233333333
3331333333333333333333222222222222222222222333333333
3333333333333333333333222222222222222222222333333333
3333333333333333333333222222222222222222222333333333
3333333333311333333333222222222222222222222333333333
3333333333311113333333222222222222222222222333333333
3333333333333333333333222222222222222222222333333333
```

FIG. 10

```
111111111111111111111    2    22222222222222   111111
111111111111111111111         22222222222222   1111111
111111111111111111111         22222222222222   1111111
111111111111111111111         22222222222222   1111111
111111111111111111111         22222222222222   1111111
1111111111111111111111      222222222222222222   111111
11111111111111111111111      222222222222222222   111111
111111111111111111111111     222222222222222222   111111
111111111111111111111111     222222222222222222   111111
1111111      111111111      222222222222222222   111111
1111111       111111111     222222222222222222   1111111
1111111       111111111     222222222222222222   1111111
11111111      111111111     222222222222222222   1111111
111111111111111111111111    222222222222222222   111111
111111111111111111111111    222222222222222222   1111
     1      1               222222222222222222
                            222222222222222222
     33      333333         222222222222222222   333
33333333333333333333333     222222222222222222      3
33333333333333333333333     222222222222222222      3
33333333333333333333333     222222222222222222   22 3
33333333333333333333333     2222222222222222        3
33333333333333333333333     2222222222222222        3
33333333333333333333333     222222222222222222   3333333
33    333333333333333       2222222222222222   3333333
33    333333333333333       2222222222222222   3333333
33    333333333333333       2222222222222222   3333333
333333333    33333333       222222222222222222   3333333
333333333     333333        222222222222222222   3333333
333333333     333333        222222222222222222   3333333
333333333     333333        222222222222222222   3333333
```

FIG. 11

21

```
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
1111111111111111111112222222222222222222211111111
3111333311133333333332222222222222222222233333
3333333333333333333332222222222222222222233333
3333333333333333333332222222222222222222233333
3333333333333333333332222222222222222222222233
3333333333333333333332222222222222222222222233
3333333333333333333332222222222222222222222233
3333333333333333333332222222222222222222233333333
3333333333333333333332222222222222222222233333333
3333333333333333333332222222222222222222233333333
3333333333333333333332222222222222222222233333333
3333333333333333333332222222222222222222233333333
3333333333333333333332222222222222222222233333333
3333333333333333333332222222222222222222233333333
3333333333333333333332222222222222222222233333333
3333333333333333333332222222222222222222233333333
```

FIG. 12

```
                    ┌─────────────┐
                    │    ENTRY    │
                    └──────┬──────┘
                           │
                           ▼
              ┌────────────────────────┐
              │      SET SIZE AND       │╲ 100
              │   THRESHOLD OF WINDOW    │
              └────────────┬───────────┘
                           │
                           ▼
              ┌────────────────────────┐
              │ MAJORITY LOGIC FILTERING │╲ 200
              └────────────┬───────────┘
                           │
                           ▼
              ┌────────────────────────┐
              │ MINIMUM AREA FILTERING  │╲ 300
              └────────────┬───────────┘
                           │
                           ▼
                    ┌─────────────┐
                    │    EXIT     │
                    └─────────────┘
```

## FIG. 13

START

INCREMENT A COORDINATE POSITION OF THE
INPUT IMAGE $I_1$ AND THE OUTPUT IMAGE $I_2$
TO BE PROCESSED TO THE NEXT POSITION i

CALCULATE THE NUMBER n OF PIXELS OF THE
INPUT IMAGE WITHIN THE WINDOW W THAT
HAS THE SAME PIXEL VALUE AS $I_1(i)$

YES ← n > THRESHOLD ? → NO

$I_2(i) = I_1(i)$

$I_2(i) = NULL$

LAST PIXEL ? → NO

YES

FIG. 14

END

FIG. 15

START

INCREMENT A COORDINATE POSITION OF THE INPUT IMAGE $I_2$ (THE OUTPUT OF THE EROSION) AND THE OUTPUT IMAGE $I_3$ TO THE NEXT POSITION j

IS THE VALUE OF THE INPUT IMAGE AT j $I_2(j)$ NULL?

NO

$I_3(j)$ $I_2(j)$

YES

IS THERE ANY VALUE OTHER THAN NULL IN THE INPUT IMAGE $I_2$ WITHIN THE WINDOW AROUND j?

YES

CALCULATE A HISTOGRAM WITHIN THE WINDOW AROUND j FOR THE INPUT IMAGE $I_2$, AND MAKE A PIXEL VALUE HAVING THE MAXIMUM FREQUENCY OF APPEARANCE P

$I_3(j) = P$

NO

CALCULATE A HISTOGRAM WITHIN THE WINDOW AROUND j FOR THE ORIGINAL IMAGE I , AND MAKE A PIXEL VALUE HAVING THE MAXIMUM FREQUENCY OF APPEARANCE P mode

$I_3(j) = Pmode$

NO

LAST PIXEL?

YES

END

25